# EUROPÄISCHE PATENTSCHRIFT

(11) **EP 0 508 070 B1**
(45) Veröffentlichungstag und Bekanntmachung des Hinweises auf die Patenterteilung: **03.12.1997**
(21) Anmeldenummer: 92102903.9
(22) Anmeldetag: 21.02.1992
(51) Int. Cl.: H04L 1/24

(54) **Verfahren und Schaltungsanordnung zur Erkennung des Synchronausfalls zweier Wortfolgen zwischen einem Messignal und einem Referenzsignal**
Method and device for recognizing loss of synchronization between two streams of words of a reference signal and a measure signal
Méthode et dispositif de reconnaissance de perte de synchronisation entre deux suites de mots d'un signal de référence et d'un signal de mesure

(30) Priorität: 06.04.1991 DE 4111176
(43) Veröffentlichungstag der Anmeldung: 14.10.1992
(73) Patentinhaber: WANDEL & GOLTERMANN GMBH & CO, D-72795 Eningen u.A. (DE)
(72) Erfinder: Renz, Günter, W-7417 Pfullingen (DE)
(74) Vertreter: Klocke, Peter, Dipl.-Ing.

(56) Entgegenhaltungen:
- EP-A- 0 321 837
- EP-A- 0 336 336
- US-A- 3 965 294
- TELECOMMUNICATIONS AND RADIO ENGINEERING, Bd. 32/33, Nr. 10, Oktober 1978,
- WASHINGTON US Seiten 54 - 57 ALEKSEYEV E. B. ET AL.: 'THE MEASUREMENT OF THE ERROR RATE OF DIGITAL TRANSMISSION SYSTEMS'
- REVIEW OF THE ELECTRICAL COMMUNICATION LABORATORY, Bd. 19, Nr. 4, April 1971, TOKYO, JP Seiten 506 - 549 NODA K. ET AL.: 'DESIGN AND PERFORMANCE OF AN EXPERIMENTAL MILLIMETER-WAVE PCM-AM REPEATER'

## Beschreibung

Die Erfindung betrifft ein Verfahren zur Erkennung des Synchronausfalls gemäß der Gattung des Anspruchs 1 und eine Schaltungsanordnung zur Durchführung des Verfahrens.

Zur Überprüfung von digitalen Übertragungsstrecken und deren Übertragungseinrichtungen werden Meßsignale verwendet, die als Prüfmuster eine Bitfolge beinhalten, welche eine Quasi-Zufallsfolge oder ein Digitalwort darstellt. Empfangsseitig wird ein Meßgerät verwendet, welches ein Referenzsignal mit gleicher Quasi-Zufallsfolge bzw. mit gleichem Digitalwort erzeugt. Das empfangene Meßsignal wird nun mit dem empfangsseitig erzeugten Referenzsignal verglichen, um Störungen auf der Übertragungsstrecke feststellen zu können. Eine Bitfehlermessung kann nur dann exakt durchgeführt werden, wenn das empfangene Meßsignal und das Referenzsignal synchronisiert sind. Bei der Verwendung von Quasi-Zufallsfolgen als Prüfmuster in Bitfehlermeßeinrichtungen verhindert das sogenannte "Gelbrich-Verfahren", welches in der DE-C- 2359716 beschrieben ist, die Neusynchronisation des empfängerseitigen Referenzmusters auch bei hohen Fehlerquoten bzw. bei Büschelfehlern.

Das im Aufsatz von Harrison, A.F.: "Measuring equipment for data transmission channels." in: Philips Televommunication Review, Vol. 27, 1. August 1967, Seiten 1 bis 10, beschriebene Verfahren eignet sich nur zum Erkennen des Synchronausfalls zwischen zwei aus Quasizufallsfolgen und nicht aus Digitalwörtern bestehenden Bitfolgen.

Ein Verfahren zur Erkennung des Synchronausfalls zweier Wortfolgen ist außerdem aus der **EP-A-0 321 837** bekannt.

Das hier beschriebene Verfahren und die erfindungsgemäße Schaltungsanordnung sind für synchronisierte Meßsignale und Referenzsignale vorgesehen, die aus einer Folge von Digitalworten (Wortfolge) bestehen. Die empfangene Wortfolge und die empfängerseitig als Referenzmuster erzeugte Referenz-Wortfolge müssen dabei synchronisiert sein. Die einzelnen Digitalworte sind dabei kurze periodische Impulsmuster mit einer vorgegebenen Länge, die im allgemeinen zwischen zwei bis sechzehn Bit oder auch zwischen zwei bis zweiunddreißig Bit liegt. Die Impulsmuster einschließlich deren Länge können vom Gerätebenutzer beliebig eingestellt werden. Für Sender und Empfänger müssen jedoch vollkommen gleiche Muster eingestellt werden, wobei das im Empfänger eingestellte Referenzmuster für einen Mustervergleich als Bezug dient.

Zu Beginn einer Bitfehlermessung muß das Referenzmuster auf das Sende- bzw. empfangene Muster (Meßsignal) synchronisiert werden. Als Kriterium für eine Neusynchronisation wurde bisher die Bitfehlerquote herangezogen. Dabei ist man so vorgegangen, daß bei Überschreiten einer vorgegebenen Fehlerquote die Neusynchronisation des Referenzmusters eingeleitet worden ist. Bei Büschelfehlern, bei denen kurzzeitig sehr hohe Fehlerquoten auftreten können, kann dies zu einer Neusynchronisation führen, die nicht notwendig ist und die damit die Bitfehlermessung unterbricht bzw. verfälscht.

Der Erfindung liegt die Aufgabe zu Grunde, ein Verfahren zur Erkennung des Synchronausfalls zweier Wortfolgen anzugeben, welches bei Auftreten von Büschelfehlern in der Regel keine Neusynchronisation des Referenzmuster-Signals einleitet.

Die Lösung dieser Aufgabe wird durch die im Anspruch 1 angegebenen Merkmale erhalten. Eine Exklusiv-Oder-Schalt ung erzeugt aus dem Vergleich zwischen empfangenen Meßsignal und dem Referenzmuster-Signal bei auftretendem Synchronausfall ein Fehlersignal, dessen aktuelle Bitfolge mit seiner um die Periodendauer des Referenzmuster-Signals zeitlich versetzten Bitfolge verglichen wird. Wird bei diesem Vergleich Koinzidenz festgestellt, so besagt dies, daß das Referenzmuster-Signal zwar bezüglich seiner Bitfolge mit dem empfangenen Meßsignal übereinstimmt, jedoch gegenüber diesem phasenverschoben ist. Das Referenzmuster-Signal wird in diesem Fall so lange bei jedem Bitfehler um ein Bit verschoben, bis die Synchronisation zwischen empfangenem Meßsignal und dem Referezmuster-Signal erreicht ist. Bei Auftreten von Büschelfehlern wird eine Koinzidenz zwischen dem aktuellen Fehlersignal und dem um eine Periode zeitlich verschobenen Fehlersignal nicht festgestellt, so daß eine Fehlerhäufung auf Grund von Büschelfehlern nicht fälschlicher Weise als Fehlsynchronisation erkannt wird. Auftretende Büschelfehler haben somit keinen störenden Einfluß auf die Synchronisation des Referenzmuster-Signals.

Zur Durchführung des Verfahrens wird eine Schaltungsanordnung gemäß Anspruch 3 vorgeschlagen. Mit dieser Schaltungsanordnung können alle stochastisch auftretenden Fehlerstrukturen vom tatsächlichen Synchronverlust unterschieden werden. Allein bei Fehlerstrukturen, die stetig mit der gleichen Periodendauer wie die Periode des Referenzmuster-Signals auftreten und die wenigstens zwei Fehler pro Musterperiode aufweisen, könnte eine ungewollte Neusynchronisation hervorgerufen werden. Dies ist allerdings beim praktischen Meßeinsatz sehr unwahrscheinlich und der Empfänger würde in einem solchen Fall asynchron wie beim bisherigen Verfahren bleiben.

Die Erfindung wird nachfolgend anhand eines in der Zeichnung dargestellten Ausführungsbeispiels näher erläutert.

Es zeigen:
Fig. 1 das Bitmuster eines empfangenen Meßsignals und des dazu synchronen Referenzmuster-Signals sowie ein zugehöriges Fehlersignal bei Auftreten eines einzigen Bitfehlers,
Fig. 2 die Signale gemäß Fig. 1, wobei jedoch das Referenzmuster-Signal gegenüber dem empfangenen Meßsignal asynchron verläuft, und
Fig. 3 ein Blockschaltbild des Ausführungsbeispiels.

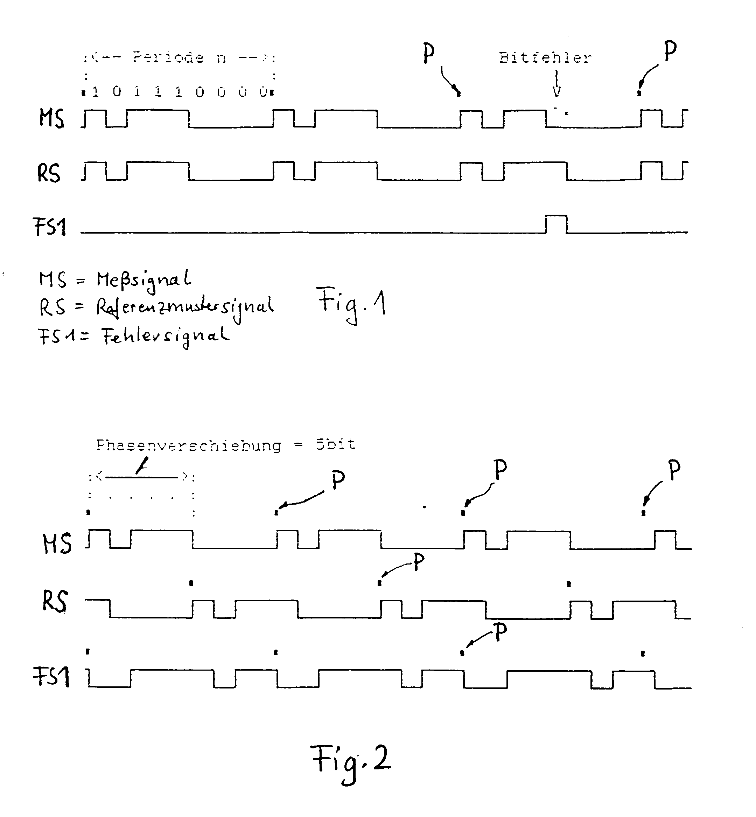

Bevor die in Fig. 1 und Fig. 2 dargestellten Signale näher betrachtet werden, wird daraufhingewiesen, daß das Meßsignal gegenüber dem Referenzmuster-Signal dann asynchron ist, wenn das Muster des Meßsignals um m Bit gegen das Referenzmuster verschoben ist, wobei 0 < m < n sein kann. Mit n wird dabei die Anzahl der Bits pro Musterperiode angegeben. Da die beiden Muster in ihrer Impulsfolge identisch sind und die gleiche Periodenlänge besitzen, entsteht im asynchronen Fall beim Bit-für-Bit-Vergleich ein Fehlermuster, dessen Periode ebenfalls die Länge n aufweist. Diese Eigenschaft dient als Grundlage des hier beschriebenen Verfahrens, um den asynchronen Zustand zwischen den beiden Mustern des Meßsignals und des Referenzmuster-Signals zu erkennen.

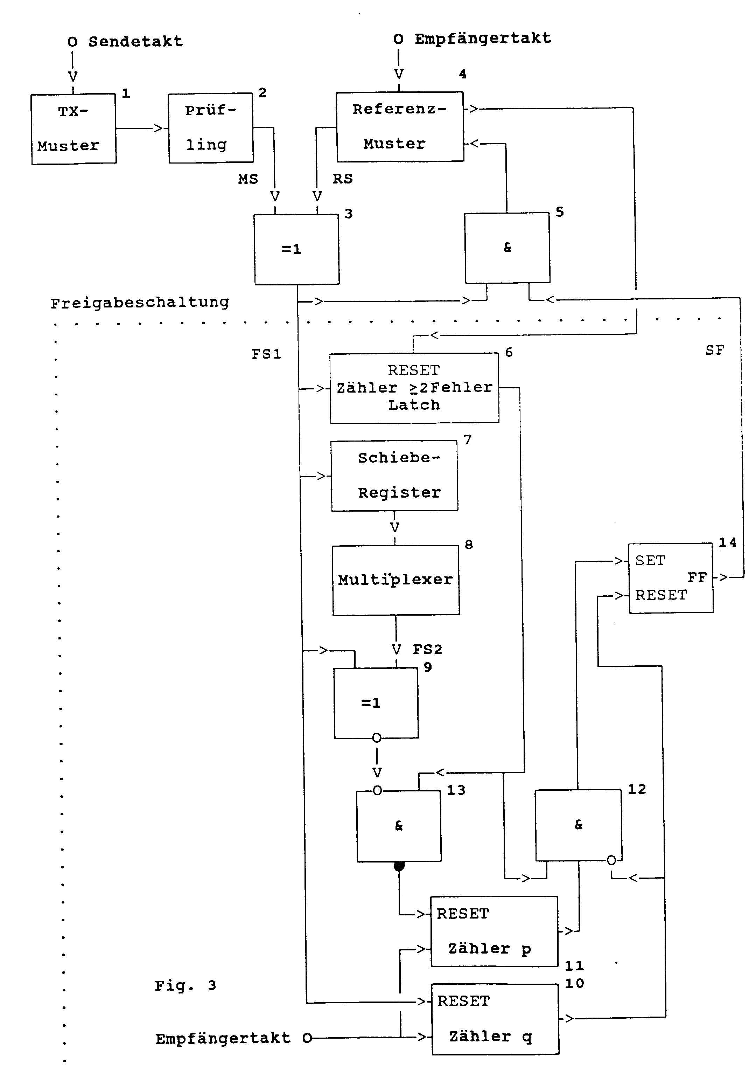

Das Fehlermuster des Fehlersignals wird zum einen direkt und zum anderen um n Bit verzögert einem weiteren Bit-für-Bit-Vergleicher zugeführt. Da bei einem Impulsmuster mit der Periodenlänge n eine Verzögerung um ebenfalls n Bit wieder das gleiche Muster liefert, sind am Eingang des weiteren Vergleichers die beiden Musterfolgen im asynchronen Fall vollkonmen identisch. Ist ein solcher Vergleicher als Exklusiv-Oder-Schaltung ausgebildet, so liefert diese ein LOW-Signal an ihrem Ausgang, welches als Kriterium für die Neusynchronisation verwendet wird. Dieser weitere Vergleicher, der bei Koinzidenz an seinem Eingang ausgangsseitig ein LOW-Signal liefert, ist in Fig. 3 mit der Bezugszahl 9 bezeichnet.

Eine weitere Eigenschaft im asynchronen Zustand von zwei Digitalworten ist, daß wenigstens zwei Fehler pro Musterperiode entstehen. Dieser Umstand wird als weiteres Kriterium für die Neusynchronisation herangezogen, die also nur dann eingeleitet wird, wenn beide genannten Kriterien erfüllt sind.

Für eine Neusynchronisation kann weiterhin vorgegeben werden, daß die beiden Kriterien wenigstens über eine vorgegebene Anzahl von Musterperioden ohne Unterbrechung erfüllt sein müssen. Je größer diese Anzahl von Musterperioden gewählt wird, um so größer ist die Sicherheit gegen nicht notwendige Neuchronisation. Allerdings wird dann auch eine erforderliche Neuchronisation entsprechend später veranlaßt.

In Fig. 1 ist der Fall eines einzigen Bitfehlers dargestellt. Im Muster des empfangenen Meßsignals ist an einer als "Bitfehler" bezeichneten Stelle eine "Null" aufgetreten, obgleich gemäß dem darunter gezeichneten Referenzmuster eine "Eins" richtig gewesen wäre. Werden beide Signale, das Meßsignal und das Referenzmuster-Signal, den beiden Eingängen einer Exklusiv-Oder-Schaltung zugeführt, so tritt an deren Ausgang das dargestellte Fehlersignal auf.

Sind dagegen Meßsignal und Referenzmuster-Signal wie in Fig. 2 dargestellt um 5 bit phasenverschoben, so entsteht das dort dargestellte Fehlersignal. Dieses hat die gleiche Periodendauer wie das Meßsignal bzw. das Referenezmuster-Signal. Beginn und Ende der Musterperioden sind durch Punkte P markiert.

Das Blockschaltbild gemäß Fig. 3 beinhaltet einen Sender 1, der ein Meßsignal MS über einen Prüfling 2 einem ersten Eingang einer Exklusiv-Oder-Schaltung 3 zuführt. Am zweiten Eingang der Exklusiv-Oder-Schaltung 3 liegt das Referenzmuster-Signal RS eines Referenzsignalgebers 4 an. Außer den Einrichtungen 1 und 2 können sämtliche übrigen Einrichtungen in einem empfangsseitigen Meßgerät angeordnet sein, wobei im Referenzsignalgeber 4 ein mit dem Sendemuster des Meßsignals MS identisches Referenzmuster erzeugt wird. Sowohl das Meßsignal als auch das Referenzsignal bestehen aus Digitalwörtern mit der Länge n, die Bitfür-Bit in der als Vergleicher arbeitenten Exklusiv-Oder-Schaltung 3 auf Gleichheit überprüft werden. Am Ausgang der Exklusiv-Oder-Schaltung 3 wird pro Bitfehler ein Impuls an mehrere Einrichtungen abgegeben, so auch an einen Eingang eines Und-Gatters 5. Die weiteren mit dem Ausgang der Exklusiv-Oder-Schaltung verbundenen Einrichtungen sind ein Zähler 6, ein Schieberegister 7, ein Eingang einer weiteren Exklusiv-Oder-Schaltung 9 sowie der Rücksetzeingang eines Zählers 10.

Der Zähler 6 erkennt, wenn mindestens zwei Fehler pro Musterperiode aufgetreten sind. Das Triggersignal des Referenzmusters, das aus einem Impuls pro Musterperiode besteht, übernimmt das Ausgangssignal des Zählers in ein Latch und setzt hierauf den Zähler 6 auf Null. Im folgenden wird die Einheit aus Zähler und Latch vereinfachend als Zähler 6 bezeichnet.

Die Stufenzahl des Schieberegisters 7 entspricht der maximalen Länge n der Digitalwörter. Die Stufen (n/2 + 1) bis n sind mit dem Multiplexer 8 verbunden, der entsprechend der Länge n eines Digitalwortes das Signal des Schieberegisters 7 duchschaltet. Für Digitalworte, deren Länge kleiner als oder gleich n/2 ist, wird die kleinstmögliche Stufe des Multiplexers 8 verwendet, die einem ganzzahligen Vielfachen der Wortlänge entspricht.

### Beispiel:

| | |
|---|---|
| Max. Wortlänge | n = 32 bit |
| Schieberegisterlänge | 32 bit |
| Bereich des Multiplexers | Stufe 17 bis 32 |
| eingestellte Wortlänge | 3 bit |
| Multiplexer schaltet | Stufe 18 |

Ein zweiter Vergleicher, der als Exklusiv-Oder-Schaltung 9 ausgebildet ist, vergleicht das am Ausgang der ersten Exklusiv-Oder-Schaltung 3 auftretende Fehlersignal FS1 mit dem verzögerten Fehlersignal FS2 und gibt ein LOW-Signal ab, falls die beiden Folgen am Eingang identisch sind. Dies ist der Fall, wenn das Meßsignal MS entweder synchron oder konstant phasenverschoben zum Referenzsignal RS ist. Zur Unterscheidung dieser beiden Fälle dient ein Zähler 11 und der Zähler 10 sowie ein Und-Gatter 12. Bei Bitfehlern oder bei verschiedenen Mustern entstehen am Ausgang der Exklusiv-Oder-Schaltung 9 HIGH-Impulse.

Der Ausgang der Exklusiv-Oder-Schaltung 9 ist mit dem invertierten Eingang eins Und-Gatters 13 verbunden, dessen invertierter Ausgang mit dem Rücksetzeingang des Zählers 11 verbunden ist. Falls das Und-Gatter 13 ein LOW-Signal abgibt, kann der Zähler 11 bis zu seinem maximalen Zählerstand p hochzählen. Auf seinem maximalen Zählerstand verharrt der Zähler 11 so lange, bis ein HIGH-Signal an seinem Rücksetz-Eingang ihn auf Null zurücksetzt.

Der Zähler 10 besitzt den Zählumfang q und ist wie auch der Zähler 11 gegen Überzählen gesichert. Fehlerimpulse der Exklusiv-Oder-Schaltung 3 setzten ihn auf Null zurück.

Koinzidenz an dem Und-Gatter 12 setzt ein Flip-Flop 14, wobei an dessen Ausgang ein HIGH-Signal entsteht. Damit wird die Neusynchronisation des Referenzmusters des Referenzsignals RS freigegeben. Jeder Fehlerimpuls der Exklusiv-Oder-Schaltung 3 verschiebt das Referenzmuster im Referenzsignal RS um 1 bit gegenüber dem Muster des Meß-signals MS.

Das Flip-Flop 14 wird zurückgesetzt, wenn der Zähler 10 seinen maximalen Zählerstand q erreicht. Damit wird die Neusynchronisation des Referenzmusters blockiert. Zu diesem Zweck ist der Zähler 10 mit dem Rücksetzeingang des Flip-Flops 14 verbunden. Das Flip-Flop 14 ist ausgangsseitig mit dem zweiten Eingang des Und-Gatters 5 verbunden, das ausgangsseitig Synchronisationsimpulse SI an den Referenzsignalgeber 4 abgibt.

Es wird noch angemerkt, daß der Zähler 6 an die mit ihm verbundenen Und-Gatter 12 und 13 erst dann ein High-Signal abgibt, wenn der Zähler 6 während einer Musterperiode 2 oder mehr Fehler gezählt hat.

Die Schaltungsteile mit den Bezugszeichen 6 bis 14 bilden eine Freigabeschaltung, die über das Flip-Flop 14 ein Synchronisations-Freigabesignal SF an das Und-Gatter 5 liefert, wenn zwischen dem Meßsignal MS und dem Referenzsignal RS eine Phasenverschiebung festgestellt wird.

Im folgenden werden drei typische Betriebsfälle beschrieben:
a) Meßsignal MS und Referenzsignal RS sind synchron zueinander und es werden keine Bitfehler detektiert.
   Am Ausgang der Exklusiv-Oder-Schaltung 3 steht ein LOW-Signal. Daraus folgt:
   - Zähler 6 wird vom Triggersignal zurückgesetzt und bleibt auf Null, da am Eingang keine Fehlerimpulse anstehen. Der Ausgang gibt LOW-Signal ab.
   - Am Ausgang des Muliplexers 8 steht ein statisches LOW-Signal.
   - Am Ausgang der Exklusiv-Oder-Schaltung 9 steht ein statisches LOW-Signal.
   - Am Ausgang des Gatters 13 steht ein statisches HIGH-Signal, das den Zähler 11 rücksetzt und der damit LOW-Signal abgibt.
   - Zähler 10 verharrt in seinem max. Zählerstand q und besitzt am Ausgang HIGH-Signal.
   - Am Gatter 12 entsteht keine Koinzidenz. Deshalb bleibt der Ausgang auf LOW-Signal.
   - Flip-Flop 14 bleibt rückgesetzt und gibt am Ausgang LOW-Signal ab.
   - Die Neusynchronisation ist blockiert und evtl. Fehlerimpulse haben keine Wirkung auf das Referenzmuster.
b) Meßsignal MS und Referenzsignal RS sind synchron zueinander. Es werden jedoch stochastisch auftretende Bitfehler gemessen.
   Am Ausgang der Exklusiv-Oder-Schaltung 3 entsteht bei jedem Bitfehler ein HIGH-Impuls. Daraus folgt:
   - Wenn zwei oder mehrere Bitfehler während einer Musterperiode auftreten, geht Zähler 6 am Ausgang auf HIGH-Signal. Andernfalls bleibt der LOW-Zustand erhalten.
   - Am Ausgang des Multiplexers 8 erscheint das um die Wortlänge verzögerte Fehlermuster.
   - Am Eingang der Exklusiv-Oder-Schaltung 9 liegen unterschiedliche Fehlermuster an, und es entsteht an deren Ausgang ein Impulsmuster, das von der Fehlerstruktur FS1 abhängig ist.
   - Am Ausgang des Gatters 13 liegt ein vom Fehlersignal abhängiges Impulsmuster an, das den Zähler 11 sporadisch zurücksetzt und der damit je nach Fehlerabstand LOW-oder HIGH-Signal abgibt.
   - Jeder Fehlerimpuls setzt Zähler 10 auf Null zurück.
   - Am Gatter 12 entsteht keine Koinzidenz und dessen Ausgang bleibt auf LOW-Signal. Beim Ausbleiben von Fehlern gibt Zahler 6 LOW-Signal ab, und Zähler 10 erreicht stets vor Zähler 11 seinen maximalen Zählerstand, der bei beiden Zählern einem HIGH-Zustand entspricht.
   - Flip-Flop 14 bleibt zurückgesetzt und gibt am Ausgang LOW-Signal ab.
   - Die Neusynchronisation ist blockiert und evtl. Fehler impulse haben keine Wirkung auf das Referenzmuster.
c) Meßsignal MS und Referenssignal RS sind zunächst synchron zueinander. Durch einen Versatz des Sendemusters muß eine Neusynchronisation eingeleitet werden.
   Der Zustand der Schaltung im synchronen Fall ist unter a) beschrieben. Verschiebt sich das Meßsignal z. B. durch eine Störung im Prüfling 2, so entsteht ein Versatz zwischen den beiden Mustern, die an der Exklusiv-Oder-Schaltung 3 anliegen.
   - Nach erfolgtem Versatz des Meßsignals MS erscheint am Ausgang von 3 das Fehlmuster FS1, das die gleiche Periodendauer wie das Muster besitzt und mindestens 2 Fehlerimpulse pro Periode aufweist.
   - Damit gibt der Zähler 6 ein statisches HIGH-Signal am Ausgang ab.
   - Am Ausgang des Multiplexers 8 erscheint das vom Schieberegister 7 um eine Wortlänge n verzögerte Fehlermuster FS2.
   - Die beiden Fehlermuster FS1 und FS2 am Eingang der Exklusiv-Oder-Schaltung 9 sind in diesem Fall identisch. Damit erscheint am Ausgang der Schaltung 9 ein statisches LOW-Signal.
   - Am Gatter 13 entsteht Koinzidenz. Dadurch steht an dessen invertiertem Ausgang LOW-Signal an.
   - Somit kann der Zähler 11 auf seinen max. Zählerstand p hochzählen und am Ausgang erscheint ein HIGH-Signal.
   - Zähler 10 wird durch jeden Fehlerimpuls rückgesetzt und gibt deshalb ein statisches LOW-Signal ab.
   - Aufgrund seiner Eingangssignale schaltet das Und-Gatter 12 durch.
   - Das Ausgangssignal des Und-Gatters 12 setzt das Flip-Flop 14. Damit ist die Neusynchronisation freigegeben.
   - Bei jedem Fehlerimpuls, den die Exklusiv-Oder-Schaltung 3 abgibt, entseht ein Impuls am Ausgang von Gatter 5, um das Referenzmuster um 1 bit gegenüber dem Meßsignal MS zu verschieben und zwar solange bis beide Pulsmuster synchron sind.

Nach erfolgter Synchronisation geht die Schaltung wieder in den Zustand über, der unter a) beschrieben ist.

## Patentansprüche

1. Verfahren zur Erkennung des Synchronausfalls zweier Wortfolgen zwischen einem Meßsignal und einem Referenzsignal mit im ungestörten Synchronbetrieb gleicher Bitfolge und gleicher Periodendauer, wobei das Meßsignal und das Referenzsignal mittels einer Exklusiv-Oder-Schaltung miteinander verglichen werden und deren Ausgangssignal zur Erzeugung von Synchronisationsimpulsen verwendet wird, **dadurch gekennzeichnet**, daß das Ausgangssignal der Exklusiv-Oder-Schaltung (3) ein Fehlersignal (FS1) darstellt, dessen aktuelle Bitfolge mit seiner um die Periodendauer des Referenzsignals (RS) zeitlich versetzten Bitfolge verglichen wird, und daß bei Koinzidenz zwischen aktueller (FS1) und der um eine Periodendauer versetzten Bitfolge (FS2) eine Neusynchronisation des Referenzsignals (RS) eingeleitet wird.

2. Verfahren nach Anspruch 1, **dadurch gekennzeichnet**, daß eine Neusynchronisation erst dann eingeleitet wird, wenn die Koinzidenz zwischen den beiden um eine Periode versetzten Fehlersignalen (FS1 und FS2) über eine vorgegebene Anzahl von Bits ununterbrochen besteht.

3. Schaltungsanordnung zur Durchführung des Verfahrens nach einem der Ansprüche 1 oder 2, mit einer Exklusiv-Oder-Schaltung, an deren beiden Eingängen einerseits ein Meßsignal und andererseits ein empfangsseitig in einem Referenzsignalgeber erzeugtes Referenzsignal anliegt, wobei beide Signale im ungestörtem Betrieb synchron gleiche Bitmuster aufweisen, und der Ausgang der Exklusiv-Oder-Schaltung an einem ersten Eingang eines Und-Gatters anliegt, dessen Ausgangssignal die Verschiebung des im Referenzsignal auftretenden Referenzmusters bewirkt und dessen zweiter Eingang mit einer Freigabeschaltung verbunden ist, die in Abhängigkeit von dem Exklusiv-Oder-Ausgangssignal bei gestörter Synchronisation ein Synchronisations-Freigabesignal abgibt, **dadurch gekennzeichnet**, daß das am Ausgang der als Vergleicher arbeitenden Exklusiv-Oder-Schaltung (3) auftretende Fehlersignal (FS1) gleichzeitig einem Zähler (6), einem Schieberegister (7), einem ersten Eingang einer weiteren Exklusiv-Oder-Schaltung (9) und einem Rücksetzeingang eines zweiten Zählers (10) zugeführt wird, daß ein mittels des Schieberegisters um eine Periode des aktuellen Fehlersignals (FS1) verzögertes Fehlersignal (FS2) erzeugt wird, welches dem zweiten Eingang der weiteren Exklusiv-Oder-Schaltung (9) zugeführt wird, daß der Ausgang der weiteren Exklusiv-Oder-Schaltung (9) mit dem invertierten Eingang eines zweiten Und-Gatters (13) verbunden ist, dessen zweiter Eingang mit dem Ausgang des erstgenannten Zählers (6) und dem Eingang eines dritten Und-Gatters (12) verbunden ist, daß der invertierte Ausgang des zweiten Und-Gatters (13) mit dem Rücksetzeingang eines dritten Zählers (11) verbunden ist, an dessen Zähleingang ebenso wie am Zähleingang des zweiten Zählers (10) der Empfängertakt anliegt, daß der Ausgang des dritten Zählers (11) mit dem zweiten Eingang des dritten Und-Gatters (12) verbunden ist, an dessen drittem, invertiertem Eingang der Ausgang des zweiten Zählers (10) anliegt, der ebenso am Rücksetz-eingang eines Flip-Flops (14) anliegt, daß der Setzeingang des Flip-Flops (14) mit dem Ausgang des dritten Und-Gatters (12) verbunden ist und daß der Ausgang des Flip-Flops (14) mit dem zweiten Eingang des ersten Und-Gatters (5) verbunden ist und an diesen das Synchronisations-Freigabesignal (SF) liefert.

## Claims

1. Method for recognizing the loss of synchronization of two streams of words between a measurement signal and a reference signal with the same bit sequence in undisturbed synchronous operation and the same cycle duration, the measurement signal and the reference signal being compared with one another by means of an exclusive-OR circuit and the output signal thereof is used for generating synchronizing pulses, characterized in that the output signal of the exclusive-OR circuit (3) constitutes an error signal (FS1), whose actual bit sequence is compared with its bit sequence time-displaced by the cycle duration of the reference signal (RS) and that in the case of coincidence between the actual error signal (FS1) and the bit sequence displaced by a cycle duration a resynchronization of the reference signal (RS) is initiated.

2. Method according to claim 1, characterized in that a resynchronization is only initiated if the coincidence between the two error signals (FS1) and (FS2) displaced by one period remains uninterrupted over a predetermined number of bits.

3. Device for performing the method according to one of the claims 1 or 2, having an exclusive-OR circuit, to whose two inputs are on the one hand applied a measurement signal and on the other hand a reference signal generated on the reception side in a reference signal generator, both signals having synchronous, identical bit patterns in undisturbed operation, and the output of the exclusive-OR circuit is applied to a first input of an AND gate, whose output signal brings about the shifting of the reference pattern occurring in the reference signal and whose second input is connected to an enable circuit, which as a function of the exclusive-OR output signal emits a synchronization enable signal in the case of undisturbed synchronization, characterized in that the error signal (FS1) occurring at the output of the exclusive-OR circuit (3) functioning as a comparator is simultaneously supplied to a counter (6), a shift register (7), a first input of a further exclusive-OR circuit (9) and a reset input of a second counter (10), that an error signal (FS2) delayed by means of the shift register by one period of the actual error signal (FS1) is generated and is supplied to the second input of the further exclusive-OR circuit (9), that the output of the further exclusive-OR circuit (9) is connected to the inverted input of a second AND gate (13), whose second input is connected to the output of the first-mentioned counter (6) and the input of a third AND gate (12), that the inverted output of the second AND gate (13) is connected to the reset input of a third counter (11), to whose counting input is applied, in the same way as to the counting input of the second counter (10), the receiver cycle, that the output of the third counter (11) is connected to the second input of the third AND gate (12), to whose third, inverted input is applied the output of the second counter (10), which is also applied to the reset input of a flip-flop (14), that the set input of the flip-flop (14) is connected to the output of the third AND gate (12) and that the output of the flip-flop (14) is connected to the second input of the first AND gate (5) and supplies thereto the synchronization enable signal (SF).

## Revendications

1. Méthode de reconnaissance de perte de synchronisation entre deux suites de mots d'un signal de référence et d'un signal de mesure avec la même séquence binaire et la même durée de périodes, lors du fonctionnement synchrone sans perturbation, avec laquelle le signal de mesure et le signal de référence sont comparés entre eux au moyen d'un circuit ou-exclusif dont le signal de sortie sert à produire des impulsions de synchronisation, **caractérisée par le fait** que le signal de sortie du circuit ou-exclusif (3) représente un signal d'alerte (FS1) dont l'actuelle séquence binaire est comparée avec sa séquence binaire décalée de la durée de périodes du signal de référence (RS), et qu'une nouvelle synchronisation du signal de référence (RS) est initialisée lors de la coincidence entre la séquence binaire actuelle (FS1) et la séquence binaire décalée d'une durée de périodes (FS2).

2. Méthode suivant la revendication 1, **caractérisée par le fait** qu'une nouvelle synchronisation n'est seulement initialisée que lorsque la coincidence entre les deux signaux d'alerte (FS1 et FS2) décalés d'une période a lieu sans interruption pendant un nombre déterminé de bits.

3. Montage d'un circuit pour mettre en application la méthode suivant l'une des revendications 1 ou 2, avec un circuit ou-exclusif comprenant à ses deux entrées d'une part un signal de mesure et d'autre part un signal de référence produit dans un générateur de signaux côté réception, les deux signaux présentant une même structure binaire synchrone lors du fonctionnement sans perturbation et la sortie du circuit ou-exclusif se trouvant à une première entrée d'un élément 'et', dont le signal de sortie entraîne le déplacement de la configuration de référence survenant dans le signal de référence, et dont la deuxième entrée est reliée à un commutateur de validation, lequel produit, en cas de perturbation de synchronisation, un signal de validation de synchronisation en fonction du signal de sortie ou-exclusif, **caractérisé par le fait** que le signal d'alerte (FS1) produit à la sortie du circuit ou-exclusif (3) fonctionnant comme comparateur est simultanément transmis à un compteur (6), à un registre de décalage (7), à une première entrée d'un autre circuit ou-exclusif (9) et à une entrée de remise à l'état initial d'un deuxième compteur (10), qu'un signal d'alerte (FS2), retardé d'une période de l'actuel signal d'alerte (FS1) au moyen du registre de décalage, est produit et transmis à la deuxième entrée de l'autre circuit ou-exclusif (9), que la sortie de l'autre circuit ou-exclusif (9) est reliée à l'entrée invertie d'un deuxième élément 'et' (13), dont la deuxième entrée est reliée à la sortie du compteur (6) nommé en premier et avec l'entrée d'un troisième élément 'et' (12), que la sortie invertie du deuxième élément 'et' (13) est reliée à l'entrée de remise à l'état initial d'un troisième compteur (11), à l'entrée duquel se situe le rythme récepteur, comme à l'entrée du deuxième compteur (10), que la sortie du troisième compteur (11) est reliée à la deuxième entrée du troisième élément 'et' (12), à la troisième entrée invertie duquel se situe la sortie du deuxième compteur (10), lequel se trouve lui-aussi à l'entrée de remise à l'état initial d'un flipflop (14), que l'entrée de positionnement du flipflop (14) est reliée à la sortie du troisième élément 'et' (12) et que la sortie du flipflop (14) est reliée à la deuxième entrée du premier élément 'et' (5) et fournit à celui-ci le signal de validation de synchronisation (SF).
